# DEMANDE DE BREVET EUROPEEN

(11) **EP 0 668 391 A1**
(43) Date de publication de la demande: **23.08.1995**
(21) Numéro de dépôt: 95420036.6
(22) Date de dépôt: 16.02.1995
(51) Int. Cl.: D06M 15/564, D06M 15/333, D06M 15/227, D06M 11/72, D06M 11/70, D06N 3/14, D06N 3/00, C03C 25/02

(54) **Support fibreux, tissé ou non, ignifuge et thermosoudable**

(30) Priorité: 18.02.1994 FR 9402081
(71) Demandeur: HEXCEL Société Anonyme:, F-69608 Villeurbanne Cedex (FR)
(72) Inventeur: Martinet, Annick, F-69500 Bron (FR); Chapot, Annie, F-73410 Novalaise (FR)
(74) Mandataire: Fleurance, Raphael

(57) **Abrégé**

- La présente invention est relative au traitement de supports fibreux, tissés ou non, en vue de leur conférer des propriétés d'ininflammabilité. Plus précisément, la présente invention concerne un support fibreux, tissé ou non, ignifuge et qui soit, en outre, thermosoudable, et inoffensif en situation de combustion.
- Ce support fibreux, de préférence en fibres de verre, est caractérisé en ce qu'il est exempt d'halogène et en ce qu'il comprend une composition ignifugeante à base d'au moins un agent ignifugeant et d'au moins un liant polymère.
- Le liant est avantageusement un mélange de polyuréthane et de copolymère éthylène / acétate de vinyle, tandis que l'ignifugeant est choisi parmi les composés contenant du phosphore et/ou de l'azote, de préférence les deux.

## Description

Le domaine de l'invention est celui du traitement de supports fibreux, tissés ou non, en vue de leur conférer des propriétés d'ininflammabilité. Plus précisément, la présente invention concerne un support fibreux, tissé ou non, ignifuge et qui soit, en outre, thermosoudable, et inoffensif en situation de combustion.

La présente invention a également pour objet un procédé de traitement d'un tel support fibreux, tissé ou non et ignifuge.

L'ignifugation de supports fibreux tels que les tissus techniques ou les non tissés repose généralement sur l'enduction des fibres élémentaires ou du support fibreux fini, à l'aide de compositions d'ignifugation. Classiquement, ces dernières comprennent des polymères halogénés, en particulier de type polychlorure de vinyle ainsi qu'un ou plusieurs ignifugeants halogénés, comme par exemple les dérivés bromés.

Les halogènes sont d'excellents retardateurs de flamme mais ils souffrent néanmoins d'un inconvénient majeur. On sait, en effet, qu'ils sont à l'origine de l'émission de gaz toxiques et corrosifs, lorsqu'ils sont mis en contact avec le feu et que se produit une combustion, ces émanations contiennent e.g. l'acide chlorhydrique dans le cas où l'on est en présence d'un liant polymère de type polychlorure de vinyle. Ces effets secondaires nocifs du feu peuvent avoir des conséquences au moins aussi graves que celles provoquées par le feu en lui-même.

Un autre aspect dont il faut tenir compte dans certains cas, concerne les propriétés mécaniques du support fibreux, tissé ou non et ignifuge. On peut, en effet, souhaiter parfois, que le traitement à l'aide d'une composition d'ignifugation n'entraîne pas une rigidification excessive des fils ou des articles finis, tissés ou non. Il est en fait préférable de pouvoir contrôler le degré de souplesse, afin de l'adapter à l'application visée.

Une autre spécification importante pour les supports fibreux, tissés ou non auxquels on s'intéresse dans le cadre du présent exposé, est la thermosoudabilité qui permet la confection d'objets constitués de plusieurs pièces raccordées entre elles. Cela concerne plus particulièrement le domaine des tissus techniques.

On connaît ainsi une étoffe enduite ignifuge ajourée divulguée par la demande de brevet français **N° 2 617 205**. Cette étoffe est formée de fils dont l'âme est recouverte d'une gaine polychlorure de vinyle (PVC) plastifié et ignifugé, l'âme étant formée par un fil de vinylal. On retrouve dans cette étoffe tous les inconvénients liés à l'emploi de polymères (PVC) et d'agents ignifugeants halogénés qui posent de sérieux problèmes de sécurité et dont l'emploi va certainement être très sévèrement réglementé, voire même interdit.

Dans le même ordre d'idées, la demande de brevet français **N° 2 645 683** décrit un tissu ignifuge et hydrofuge, qui est revêtu d'un enduit comprenant de nombreux produits liants, plastifiants et ignifugeants, dont certains sont halogénés. On peut citer notamment le PVC, le trioxyde d'antimoine, l'oxyde de décabromodiphényle, la paraffine chlorée... Même s'il répond aux critères d'ininflammabilité, ce type de tissus doit être écarté, au motif qu'il est, de toute évidence, potentiellement toxique en situation de combustion.

Le brevet européen **n° 212 575** concerne des compositions thermoplastiques ignifuges exemptes d'halogènes et utile pour le revêtement de fils et câbles. Ces compositions sont à base de copolymères éthylène/acrylate, de polymère d'éthylène ou de propylène, d'un élastomère de copolyétherester ou d'un copolymère éthylène / ester vinylique d'acide alcanoïque monocarboxylique et enfin d'un agent ignifugeant de type sel métallique inorganique hydraté.

Bien que ces compositions soient satisfaisantes sur le plan des performances d'ignifugation et de faible nocivité à la combustion, il n'en reste pas moins qu'elles s'appliquent spécifiquement au revêtement de fils et de câbles de téléphone ou similaire, ce qui est relativement éloigné des supports fibreux, tissés ou non, considérés dans le cadre de l'invention.

En outre, ces compositions ne devraient pas être en mesure d'apporter la thermosoudabilité souhaitable pour les articles constitués par des tissus techniques des non-tissés ou autres articles fibreux souples. En outre, ces compositions n'ont vraisemblablement pas d'aptitudes à rendre infroissables et agréables au toucher des supports fibreux, tissés ou non.

Il est également à noter que ces compositions ne s'appliquent pas à des supports à base de fibres techniques, telles que les fibres de verre.

Enfin, il n'est nullement démontré que ces compositions procurent une stabilité à la lumière et une translucidité, qui sont pourtant des propriétés intéressantes pour les articles considérés.

Dans cet état de la technique, l'un des objectifs essentiels de la présente invention est de fournir un support fibreux, tissé ou non, qui soit ignifuge, thermosoudable, ainsi qu'inoffensif et non corrosif à la combustion.

Un autre objectif de l'invention est de fournir un support fibreux, tissé ou non, qui remédie aux inconvénients des tissus et des non-tissés ignifuges de l'art antérieur, sans sacrifier aux caractéristiques "textiles" d'infroissabilité, de toucher agréable pas plus qu'aux propriétés mécaniques, notamment de souplesse, ni à la stabilité à la lumière.

Un autre objectif de l'invention est de fournir un support fibreux, tissé ou non, ignifuge et thermosoudable, qui soit d'obtention aisée et économique.

Un autre objectif de l'invention est de fournir un procédé d'ignifugation de supports fibreux tissés ou non, satisfaisant aux impératifs industriels de faisabilité technique et de rentabilité.

Ces objectifs, parmi d'autres, sont atteints par la présente invention qui a, tout d'abord, pour objet un support fibreux tissé ou non, ignifuge et thermosoudable du type de ceux comprenant une composition ignifugeante à base d'au moins un agent ignifugeant et d'au moins un liant polymère,
caractérisé :
- en ce qu'il est exempt d'halogène,
- et en ce que le liant polymère est un mélange d'au moins un polyuréthane (PU) avec au moins un autre polymère choisi parmi les copolymères polyoléfiniques et, de préférence, parmi les copolymères éthylène/acétate de vinyle.

Il est du mérite de la Demanderesse d'être parvenue à ignifuger un support fibreux tissé ou non à l'aide d'une composition ignifugeante, exempte d'halogène mais présentant tout de même des performances d'ininflammabilité de niveau M1 selon la norme NF P 92503. L'une des difficultés de cette démarche réside dans le fait que le traitement ignifuge ne doit pas porter préjudice aux caractéristiques recherchées traditionnellement pour certains articles de ce genre : infroissabilité, (dès qu'il s'agit de matériau souple), translucidité, stabilité à la lumière, toucher agréable.

Au sens de la présente invention, on désigne par le terme "support fibreux tissé ou non" tous les articles textiles tels que les tissus techniques, les articles non tissés, tels que les voiles constitués de fibres techniques entrelacées et incluses dans une matrice (par exemple en polymère synthétique), les articles tricotés ainsi que tous les autres articles similaires.

Les matières premières fibreuses à considérer dans le cadre de l'invention sont notamment les fibres de carbone, de verre ou de silice, ou bien encore les fibres synthétiques e.g. en aramide, polyester ou analogues.

Les supports concernés sont, de préférence, de nature souple, sans exclure pour autant les supports plus ou moins rigides.

Suivant une caractéristique préférée de l'invention, le support fibreux, tissé ou non, est constitué par un tissu technique ou un non-tissé en fibres de verre ou analogues.

La sélection de l'ignifugeant n'est pas le fruit d'une démarche naturelle et évidente, puisque ce dernier doit être compatible avec le liant polymère et coopérer avec lui pour conférer au revêtement ignifugeant les propriétés attendues et visées ci-dessus.

Il s'ensuit que selon une modalité préférée de réalisation de l'invention, l'ignifugeant est choisi parmi les composés contenant du phosphore et/ou de l'azote. De façon plus préférée encore, on sélectionne des composés azotés et phosphorés. Il peut s'agir, par exemple, de composés azotés du phosphore, tels que l'orthophosphate diammonique ou bien encore les polyphosphates d'ammonium.

Il va de soi que l'ignifugeant peut être constitué d'une seule espèce moléculaire azote/phosphore ou d'un mélange de plusieurs espèces azote/phosphore différentes.

Avantageusement, l'ignifugeant retenu est de nature telle qu'il n'ait pas de tendance à la reprise en eau et qu'il soit thermostable.

En pratique, et sans que cela ne soit limitatif, les produits commercialisés sous les dénominations "FLACAVON" H 14/42 et AZ par la Société SCHILL et SEILACHER, se sont avérés être particulièrement appropriés en tant qu'ignifugeants, susceptibles d'être compris dans la composition d'ignifugation du support selon l'invention.

S'agissant du liant polymère de ladite composition, il est avantageusement formé par au moins un polyuréthane, de préférence de type aliphatique.

Bien que les polyuréthanes sont réputés être difficiles à ignifuger avec d'autres composés que les halogènes, il a pu être constaté, de façon toute à fait surprenante et inattendue, que la combinaison polyuréthane/ignifugeant phosphore azote conforme à l'invention, donne des résultats tout à fait satisfaisants non seulement en matière de résistance au feu, mais aussi en matière d'infroissabilité et de toucher, s'agissant des supports fibreux souples.

Dans un mode préféré de réalisation de l'invention, le (ou les) polyuréthane(s) est (sont) associé(e)s à au moins un autre polymère de nature différente sélectionnés de préférence parmi les copolymères polyoléfiniques et plus préférentiellement encore parmi les copolymères éthylène/acétate de vinyle.

Pour optimiser encore les performances de ce liant préféré conformément à l'invention, on prévoit de mettre en oeuvre un liant formé d'un mélange de polyuréthane (PU) et de copolymère éthylène / acétate de vinyle (EVA), dans les proportions (PU :EVA), exprimées en partie en poids sec, suivantes :

| | | |
|---|---|---|
| | 10 : 100 à | 90 : 100 |
| de préférence | 30 : 100 à | 80 : 100 |
| et plus préférentiellement encore | 35 : 100 à | 60 : 100 |

En définitive, la composition d'ignifugation que l'on utilise, de façon privilégiée, dans le support fibreux selon l'invention, est définie par les concentrations pondérales suivantes :
- liant polymère : 50 à 90 % en poids sec,
   de préférence 60 à 80 % en poids sec
   et plus préférentiellement de l'ordre de 70 ± 5 %,
- Ignifugeant : 10 à 50 % en poids sec,
   de préférence 20 à 40 % en poids sec,
   et plus préférentiellement encore de l'ordre de 30 ± 5 %.

Dans certains cas, il est apparu souhaitable, pour contrecarrer la propension de l'EVA à reprendre de l'eau et à devenir collant, d'adjoindre à la composition ignifugeante au moins un agent anti-adhésif ("anti-tacking") à raison de 2,0 à 20 % en poids par rapport à l'ensemble des constituants de ladite composition ignifugeante.

Cet agent anti-tacking est choisi parmi les produits porteurs d'une fonctionnalité hydrofugeante. Il peut ainsi s'agir, par exemple, de complexes d'acides aminés ou de corps gras modifiés, de préférence de nature cationique.

En ce qui concerne la structure du support fibreux tissé ou non, il faut considérer, de façon non limitative, que ce sont des réalisations de type "multicouches" qui sont les préférées selon l'invention. On désigne par structure "multicouches" au sens de l'invention, toute structure dans laquelle le support fibreux est revêtu sur au moins l'une de ces faces d'un film (ou d'une couche) protecteur, obtenu à partir de la composition ignifugeante, telle que définie supra.

En pratique, le support fibreux est donc généralement pourvu, sur au moins une de ses faces, de préférence sur chacune de ses faces, d'au moins une des susdites couches protectrices, de préférence à base de PU-EVA-IGNIFUGEANT phosphore/azote- éventuellement agent anti-tacking.

Parmi les alternatives possibles à cette structure préférée, on peut, par exemple, citer celles consistant :
- à chemiser les fils élémentaires avec la composition ignifugeante,
- ou à incorporer la composition au sein du support fibreux.

Bien que moins avantageuse, ces alternatives ne sont cependant pas à exclure.

S'agissant de l'obtention du support fibreux, préféré selon l'invention, il passe tout d'abord par la préparation de la composition ignifugeante visée ci-dessus. En pratique, on réalise tout d'abord le mélange des divers constituants de la composition ignifugeante, dans les proportions voulues et dans un milieu solvant et/ou de dispersion, de préférence aqueux (e.g : eau pure).

La dispersion et/ou la solution ainsi obtenue est ensuite utilisée pour procéder à l'application d'une couche ignifugeante sur les faces d'un support fibreux, par exemple un tissu de verre, en recourant aux techniques classiques dans ce domaine, telles que le foulardage ou l'enduction.

Dans une dernière étape, on procède à l'élimination du solvant du support ainsi traité, par exemple, par séchage de manière conventionnelle.

Le support fibreux tissé ou non (e.g. tissu ou voile de verre), tel que décrit ci-dessus, fournit tous les avantages attendus, à savoir :
- thermosoudabilité,
- ininflammabilité sans production de produits toxiques,
- infroissabilité,
- translucidité,
- toucher agréable,
- stabilité à la lumière,
- et stabilité dimensionnelle.

Il convient également de noter que la composition ignifugeante caractéristique du support selon l'invention, est formulée de telle sorte qu'elle est parfaitement compatible avec les fibres constitutives dudit support. Il s'ensuit notamment que la (ou les) couche(s) est (sont) particulièrement bien fixée(s) sur ledit support et forme(nt) ainsi une structure multicouches cohésive.

Selon un autre de ces aspects, l'invention peut également concerner la composition ignifugeante décrite supra, en tant que telle.

Parmi toutes les applications possibles de l'invention, on peut citer notamment tous les tissus techniques utilisés par exemple dans le bâtiment comme revêtement ou bien encore comme matière première pour la réalisation de stores ou rideaux.

Les exemples qui suivent permettront de mieux comprendre l'invention et de faire ressortir tous ces avantages ainsi que ces variantes de réalisation. Lesdits exemples décrivent la réalisation de supports fibreux en tissu de verre revêtus d'une ou deux couches externes à base de la composition ignifugeante considérée.

### EXEMPLES

Dans tous les exemples qui suivent, le support fibreux mis en oeuvre est un tissu de verre du type de ceux commercialisés par la Société HEXCEL.

Ce tissu de verre peut être éventuellement soumis à un traitement préalable de teinture ou d'impression, selon les techniques traditionnelles de foulardage, à l'aide d'une émulsion comprenant des pigments et des liants appropriés.

### EXEMPLE 1 :

On procède tout d'abord à la préparation d'une dispersion aqueuse destinée à former la composition ignifugeante en mélangeant de façon homogène les produits suivants :
- polyuréthane de type "EMULDUR® DS 2299" commercialisée par la Société BASF,
- copolymère d'éthylène / acétate de vinyle (EVA) de type "UKANOL", commercialisé par la Société SCHILL & SEILACHER,
- Ignifugeant constitué par une dispersion aqueuse d'un composé phosphore/azote, de type "FLACAVON H 14/42", commercialisé par la Société SCHILL & SEILACHER,
- Agent anti-tacking de type "EVORAL ET" commercialisé également par la Société SCHILL & SEILACHER.

Les pourcentages en poids sec mis en oeuvre sont les suivants :
- Polyuréthane : 20,3 %
- EVA : 50,8 %
- Ignifugeant : 28,5 %
- Agent anti-tacking : 0,3 %.

L'étape suivante consiste à appliquer la composition aqueuse ignifugeante sur le tissu de verre éventuellement teint ou imprimé par foulardage, ou par enduction.

Les conditions d'application de la composition sont réglées de telle sorte que l'on obtienne sur chaque face un dépôt de 30 g de matière sèche de composition / m² de tissu.

La dernière étape consiste en un séchage, par passage dans un four tunnel à une température de 180° C, de façon à éliminer la phase aqueuse.

Le tissu obtenu possède sur ses deux faces un revêtement ignifugeant parfaitement adhérent et cohésif.

### EXEMPLE 2 :

Les produits utilisés sont les mêmes que ceux de l'exemple 1, sauf en ce qui concerne l'EVA qui est, cette fois, constitué du produit commercialisé sous la dénomination "VINAMUL 3265" par la Société VINAMUL.

Les pourcentages en poids sec des constituants de la composition ignifugeantes sont les suivants :
- PU : 19,4 %,
- EVA : 48,6 %,
- Ignifugeant : 31,6 %
- Agent anti-tacking : 0,3 %.

On ignifuge alors un tissu de verre en suivant le même protocole que celui de l'exemple 1.

### EXEMPLE 3 :

Dans cet exemple, on fait seulement varier la nature de polyuréthane en ce qui concerne la constitution de la composition ignifugeante. Ce polyuréthane est désormais un polyuréthane commercialisé sous la dénomination "IMPRANIL DLN", commercialisé par la Société BAYER.

Les pourcentages mis en oeuvre sont les suivants :
- PU : 18,5 %,
- EVA : 55,4 %,
- Ignifugeant : 25,8 %,
- Agent antitacking : 0,3 %.

On répète le protocole d'ignifugation des exemples 1 et 2.

### EXEMPLE 4 :

On évalue dans ce qui suit les propriétés des tissus de verre ignifugés selon les exemples 1 à 3.
**4. 1.** BATTERIE DE TEST MISE EN OEUVRE :
   4.1.1. Ignifugation
      On s'appuie ici sur la norme NF P92503, avec brûleur électrique.
   4.1.2. Stabilité à la lumière
      L'appareillage mis en oeuvre est un dispositif de type xénotest ou Suntest.
      Méthodologie : l'échantillon à contrôler est placé pendant 300 heures sous une lampe à Arc Xénon (dans le Suntest). Au terme de cette exposition, on réalise uen notation à l'aide de "l'échelle des bleus".
      Cette échelle, bien connue dans le domaine technique considérée s'étend de deux 0 à 8. Un échantillon est considéré comme possédant une stabilité à la lumière correcte si la notation qu'on peut lui affecter est supérieure ou égale à 7.
   4.1.3. Thermosoudabilité
      L'appareillage utilisé est une pince chauffante et le test consiste à préparer une éprouvette de 30 cm x 6 cm, que l'on replie sur elle-même et que l'on place sous pression entre les mâchoirs de la pince chauffante.
      La température appliquée par la pince est de 160° C, sous une pression de l'ordre de 6 Bars et pour une durée du test de 5 secondes.
      Pour tester la soudure réalisée, on met en oeuvre ensuite un test de traction visant à déterminer la force nécessaire pour arracher la soudure. Ce test est réalisé à l'aide d'une machine apte à réaliser la traction et la mesure de la force nécessaire.
   4. 1.4. Infroissabilité
      Il s'agit là d'un test subjectif, suivant lequel on froisse l'échantillon et on observe ensuite visuellement l'aspect induit par cette manipulation.
      Le critère de qualité recherché pour les échantillons, est que ceux-ci retrouvent leur état initial après froissage. De plus, les échantillons froissés et observés par transparence ne doivent pas présenter des marques de pliure rémanentes.
**4.2.** RÉSULTATS :
   Les tissus enduits des exemples 1 à 3 présentent tous une ininflammabilité de niveau M₁.
   Ils sont tous thermosoudables si l'on juge par les forces de traction mesurées, à savoir :
   Exemple 1 : 31 N, Exemple 2 : 27 N, Exemple 3 :30 N.
   Toutes ces valeurs sont supérieures au seuil de 25 N, en deça duquel on considère que l'échantillon ne présente pas la thermosoudabilité requise.
   Ils sont par ailleurs tous stables à la lumière puique la note obtenue est de : 7/8 dans tous les cas.
   Et enfin, on observe qu'ils répondent aux sous-critères d'infroissabilité selon le test subjectif défini au 4.1.4.

## Revendications

**1 -** Support fibreux tissé ou non, ignifugé et thermosoudable et du type de ceux comprenant une composition ignifugeante à base d'au moins un agent ignifugeant et d'au moins un liant polymère,
caractérisé :
- en ce que qu'il est exempt d'halogène,
- et en ce que le liant polymère est un mélange d'au moins un polyuréthane (PU) avec au moins un autre polymère choisi parmi les copolymères polyoléfiniques et, de préférence, parmi les copolymères éthylène/acétate de vinyle.

**2 -** Support fibreux selon la revendication 1, caractérisé en ce qu'il est constitué par un tissu technique ou un non-tissé en fibres de verre ou analogues.

**3 -** Support fibreux selon la revendication 1 ou la revendication 2, caractérisé en ce que l'ignifugeant est choisi parmi les composés contenant du phosphore et/ou de l'azote, de préférence les deux.

**4 -** Support fibreux selon la revendication 1, caractérisé en ce que le liant est un mélange de polyuréthane (PU) et de copolymère éthylène / acétate de vinyle (EVA), dans les proportions (PU : EVA), exprimées en partie en poids sec, suivantes :
| | | |
|---|---|---|
| | 10 : 100 à | 90 : 100 |
| de préférence | 30 : 100 à | 80 : 100 |
| et plus préférentiellement encore | 35 : 100 à | 60 : 100 |

**5 -** Support fibreux selon l'une quelconque des revendications 1 à 4, caractérisé en ce que la composition ignifugeante est définie par les concentrations pondérales suivantes :
- liant polymère: 50 à 90 % en poids sec,
de préférence 60 à 80 % en poids sec
et plus préférentiellement de l'ordre de 70 % ± 5 %,
- Ignifugeant : 10 à 50 % en poids sec,
de préférence 20 à 40 % en poids sec,
et plus préférentiellement encore de l'ordre de 30 ± 5 %.

**6 -** Support fibreux selon l'une quelconque des revendications 1 à 5, caractérisé en ce que la composition ignifugeante comporte en outre au moins un agent anti-adhésif ("anti-tacking") à raison de 2,0 à 20 % en poids par rapport à l'ensemble des constituants de ladite composition ignifugeante.

**7 -** Support fibreux selon l'une quelconque des revendications 1 à 6, caractérisé en ce qu'il est revêtu sur au moins l'une de ses faces d'au moins un film protecteur obtenu à partir de la composition ignifugeante.

**8 -** Procédé d'obtention du support fibreux selon la revendication 7, caractérisé en ce qu'il consiste à appliquer la composition ignifugeante, se présentant sous la forme d'une dispersion et/ou solution dans un solvant, de préférence aqueux, sur le support par enduction ou foulardage, puis à éliminer le solvant du support ainsi traité, eg par séchage.

**9 -** Store, caractérisé en ce qu'il est réalisé avec un support fibreux selon l'une quelconque des revendications 1 à 7.
